# EUROPÄISCHE PATENTSCHRIFT

(11) **EP 2 733 113 B1**
(45) Veröffentlichungstag und Bekanntmachung des Hinweises auf die Patenterteilung: **05.04.2017**
(21) Anmeldenummer: 12192496.3
(22) Anmeldetag: 14.11.2012
(51) Int. Cl.: B67D 7/02, B67D 7/34

(54) **Zapfventil mit einem Sicherheitsventil**
Fuel valve with a safety valve
Buse de distribution avec soupape de sécurité

(43) Veröffentlichungstag der Anmeldung: 21.05.2014
(73) Patentinhaber: Elaflex Hiby Tanktechnik GmbH & Co. KG, 22525 Hamburg (DE)
(72) Erfinder: Kunter, Stefan, 22337 Hamburg (DE); Meyer, Ulrich, 22589 Hamburg (DE)
(74) Vertreter: Glawe, Delfs, Moll

(56) Entgegenhaltungen:
- EP-A1- 2 186 773
- DE-U1-202010 016 319
- DE-U1-202011 002 664
- GB-A- 2 443 427
- US-A- 5 562 133
- US-B1- 6 374 868

## Beschreibung

Die Erfindung betrifft ein Zapfventil zur Abgabe einer Flüssigkeit in einen Tank eines Kraftfahrzeugs, mit einem Hauptventil.

Zapfventile zur Betankung von Kraftfahrzeugen sind beispielsweise aus EP 2 186 773 A1 bekannt. Ebenfalls bekannt sind Zapfventile mit einem Fehlbetankungsschutz, der sicherstellen soll, dass eine Flüssigkeitsabgabe nur nach dem Einführen in einen speziell für diese Flüssigkeit vorgesehenen Tank erfolgt. In einfachen Fällen kann ein solcher Fehlbetankungsschutz lediglich unterschiedliche Durchmesser von Auslaufrohr des Zapfventils und Einfüllstutzen des zugehörigen Tanks beinhalten, wie beispielsweise bekannt bei Zapfventilen für Benzin- und Dieselkraftstoff. Aus dem Dokument US 6,374,868 B1 ist außerdem ein Zapfventil zur gleichzeitigen Abgabe zweier Flüssigkeiten in zwei Tanks bekannt, wobei eine Einrichtung dafür sorgt, dass die beiden Flüssigkeiten nur gleichzeitig ausgebracht werden können, ohne dass die Flüssigkeiten sich bei der Betankung der beiden Tanks vermischen.

Im Zuge der sich verschärfenden Abgasnormen benötigen einige Kraftfahrzeuge Hilfsflüssigkeiten, die die Verbrennung schadstoffarm gestalten und damit Abgasemissionen senken sollen. Bekannt ist hier insbesondere 32,5 %ige Harnstofflösung (bekannt unter dem Markennamen AdBlue), die zur Senkung der Stickoxidemissionen von Dieselmotoren dient.

Harnstofflösung als Hilfsflüssigkeit ist im LKW-Bereich bereits weit verbreitet, wird aber in Zukunft auch bei Diesel-PKW zur Anwendung kommen. Die Bedeutung eines Fehlbetankungsschutzes wird sich somit erhöhen, wenn auch PKW zwei Tanks für Dieselkraftstoff und eine Hilfsflüssigkeit wie Harnstofflösung aufweisen werden.

Der Erfindung liegt daher die Aufgabe zugrunde, ein Zapfventil der eingangs genannten Art zu schaffen, das die Möglichkeit einer verbesserten Sicherung gegenüber Fehlbetankungen aufweist und problemlos im Tankstellenumfeld einsetzbar ist.

Die Erfindung löst diese Aufgabe dadurch, dass stromab von dem Hauptventil ein Sicherheitsventil angeordnet ist, das von einer Schließstellung durch eine in Richtung stromauf weisende Öffnungsbewegung in eine Öffnungsstellung bringbar ist, und dass eine Sicherheitseinrichtung vorgesehen ist, die eine Wirkverbindung mit dem Sicherheitsventil aufweist, die zur Detektion des Einführens des Zapfventils in einen für die entsprechende Flüssigkeit vorgesehenen Tank ausgebildet ist, und die eine Bewegung des Sicherheitsventils von der Schließ- in die Öffnungsstellung bewirkt, sobald ein Einführen des Zapfventils in einen für die entsprechende Flüssigkeit vorgesehenen Tank detektiert wird.

Zunächst seien einige im Rahmen der Erfindung verwendete Begriffe erläutert.

Ein Zapfventil ist eine Vorrichtung zur Kontrolle des Flüssigkeitsdurchflusses während eines Betankungsvorgangs. Die Anforderungen an die Bau- und Arbeitsweise von automatischen Zapfventilen für die Benutzung an Zapfsäulen sind in der DIN EN 13012 Doc. 2001 geregelt. Dort definierte Begriffe werden auch in der vorliegenden Anmeldung verwendet.

Das Merkmal "zur Abgabe einer Flüssigkeit in ein Tank eines Kraftfahrzeugs" drückt die Eignung des Zapfventils für einen solchen Betankungsvorgang aus.

Mittels des Hauptventils steuert der Benutzer die Flüssigkeitsabgabe. Zur Betätigung des Hauptventils dient in der Regel ein Betätigungshebel (auch Schalthebel genannt). Das Auslaufrohr ist die Vorrichtung, durch die die Flüssigkeit in den zu befüllenden Behälter geleitet wird.

Stromab, das heißt in der vorgesehenen Fließrichtung der Flüssigkeit vom Hauptventil hin zum Auslaufrohr, ist ein zusätzliches Sicherheitsventil angeordnet. Dieses Sicherheitsventil ist von einer den Flüssigkeitsdurchfluss auch bei geöffnetem Hauptventil sperrenden Schließstellung durch eine stromauf weisende Öffnungsbewegung in eine Öffnungsstellung bringbar. Dies bedeutet, dass dieses Sicherheitsventil geöffnet werden muss gegen die Strömungsrichtung der ausströmenden Flüssigkeit bzw. ggf. gegen einen von dieser Flüssigkeit aufgebauten Druck. Ein weiteres Element des erfindungsgemäßen Zapfventils ist eine Sicherheitseinrichtung, die zur Detektion des Einführens des Zapfventils in einen für die entsprechende Flüssigkeit vorgesehenen Tank ausgebildet ist.

Die Sicherheitseinrichtung ist bevorzugt zur Wechselwirkung mit einem Einfüllstutzen eines für die entsprechende Flüssigkeit vorgesehenen Tanks ausgebildet. Bevorzugt wird sie durch das Einführen des Zapfventils in den dafür ausgebildeten Tankeinfüllstutzen automatisch von der Sperrstellung in die Freigabestellung gebracht. Nach dem Einführen in den entsprechenden Tankeinfüllstutzen kann somit durch die Betätigung des Betätigungshebels mit dem Betankungsvorgang begonnen werden.

Die Sicherheitseinrichtung kann beispielsweise zur Wechselwirkung mit der baulichen/mechanischen Gestaltung eines entsprechenden Tankeinfüllstutzens vorgesehen sein. Harnstofftanks in Kraftfahrzeugen besitzen in der Regel einen Tankeinfüllstutzen, der bereits unmittelbar im Eingangsbereich das Auslaufrohr des zugehörigen Zapfventils eng umschließt. Die Sicherheitseinrichtung kann beispielsweise ein Element aufweisen, das im Bereich des Auslaufrohrs verschieblich angeordnet ist und von dem stirnseitigen Rand des Tankeinfüllstutzens von der Sperrin die Freigabestellung gedrückt wird, wie weiter unten noch näher beschrieben. Alternativ kann die Sicherheitseinrichtung bspw. magnetisch mit einem im Bereich des Tankeinfüllstutzens angeordneten Magneten wechselwirken.

Die Sicherheitsvorrichtung steht in Wirkverbindung mit dem Sicherheitsventil. Sobald die Sicherheitsvorrichtung ein Einführen in einen geeigneten Tank detektiert, wird über diese Wirkverbindung eine Öffnungsbewegung des Sicherheitsventils herbeigeführt. Das Sicherheitsventil bewegt sich dadurch mit einer Richtungskomponente stromauf von der Schließ- in die Öffnungsstellung. Fehlbetankungen werden auf diese Art und Weise vermieden.

Die Sicherheitsvorrichtung kann als ein Detektor ausgebildet sein, das Sicherheitsventil kann einen entsprechenden Aktuator aufweisen und die Wirkverbindung kann beispielsweise elektrisch erfolgen.

Im Rahmen der Erfindung ist es jedoch besonders bevorzugt, dass die Wirkverbindung zwischen Sicherheitseinrichtung und Sicherheitsventil ohne Fremdenergie erfolgt. Fremdenergie ist jedwede Energieform, die eigens für den Betrieb der Sicherheitseinrichtung zugeführt oder einer im Zapfventil angeordneten Energiequelle entnommen wird. Der Begriff Fremdenergie umfasst insbesondere elektrische Energie, somit arbeitet das erfindungsgemäße Zapfventil ohne elektrische Energie, benötigt somit keine externe elektrische Energiezufuhr oder eine interne elektrische Energiequelle, beispielsweise Batterie. Der Begriff Wirkverbindung zwischen Sicherheitseinrichtung und Sicherheitsventil bezeichnet funktional die Betätigung/Beeinflussung des Sicherheitsventils durch die Sicherheitseinrichtung dergestalt, dass in der Sperrstellung der Sicherheitseinrichtung keine Öffnung des Sicherheitsventils stattfindet.

Die erfindungsgemäße Ausführung der Sicherheitseinrichtung und deren Wirkverbindung mit dem Sicherheitsventil ohne Fremdenergie, insbesondere elektrische Energie, erlaubt eine Verwendung des erfindungsgemäßen Zapfventils im unmittelbaren Umfeld von weiteren Zapfventilen, aus denen Kraftstoff abgegeben wird, die daher besonderen Anforderungen an den Explosionsschutz genügen müssen. Beispielsweise erlaubt es die Erfindung, ein Zapfventil zur Abgabe von Harnstofflösung im unmittelbaren Umfeld von Diesel- oder auch Benzinzapfventilen anzuordnen, beispielsweise an der gleichen Zapfsäule.

Im Stand der Technik bekannte Zapfventile für Harnstofflösung mit einer entsprechenden Sicherheitseinrichtung gegen Fehlbetankung benötigen hingegen elektrische Energie für Sensoren, die das Einführen in einen speziellen sog. AdBlue Tank detektieren sollen und damit Fehlbetankungen verhindern. Sie müssen daher entfernt von Kraftstoffzapfsäulen angeordnet werden, um den Explosionsschutzanforderungen zu genügen. Dies macht einen Tankvorgang sowohl für Diesel- als auch für Harnstofflösung durch den erforderlichen zusätzlichen Rangiervorgang sehr viel aufwändiger. Für im gewerblichen Bereich eingesetzte LKW mag dies noch hinnehmbar sein, im PKW-Bereich würde ein solcher doppelter Tankvorgang mit zwischenzeitigem Umsetzen des Fahrzeugs nicht auf Akzeptanz stoßen. Die Erfindung erlaubt es, Zapfventile für Harnstofflösungen mit solchen für Dieselkraftstoff in unmittelbarer Nähe miteinander zu kombinieren, beispielsweise in einer einzigen Zapfsäule.

Die Wirkverbindung zwischen Sicherheitseinrichtung und Sicherheitsventil erfolgt erfindungsgemäß bevorzugt magnetisch. Beispielsweise kann die Sicherheitseinrichtung ein durch Einführen des Auslaufrohrs des Zapfventils in einen dafür vorgesehenen Tank verschiebliches Element mit einem Magneten aufweisen, dessen Verschiebung bewirkt durch Wechselwirkung mit einem am Sicherheitsventil, beispielsweise dessen Ventilschaft, angeordneten Magneten eine Öffnungsbewegung dieses Sicherheitsventils. Alternativ kann ein entsprechender Magnet im Bereich des Tankeinfüllstutzens angeordnet sein, der mit dem Magneten des Ventilschafts wechselwirkt. Das Einführen des Zapfventils in den Tank geschieht bei geschlossenem Hauptventil, somit ist der Bereich des Zapfventils stromab des Hauptventils drucklos, sodass die Öffnungsbewegung des Sicherheitsventils vor dem Öffnen des Hauptventils auch durch verhältnismäßig geringe Magnetkräfte erfolgen kann, da diese nicht gegen den Staudruck vor dem Sicherheitsventil anstehender Flüssigkeit erfolgen muss.

Das Sicherheitsventil ist bevorzugt im Bereich des Auslaufrohrs angeordnet, der Ventilsitz kann im Bereich des Auslaufendes des Auslaufrohrs angeordnet sein. Bevorzugt sind Ventil und Ventilschaft so ausgebildet, dass das Sicherheitsventil durch Flüssigkeitsdruck im Auslaufrohr in die Schließstellung vorgespannt wird. Dadurch wird die Dichtwirkung des Sicherheitsventils verstärkt, wenn durch eine Fehlbedienung das Hauptventil geöffnet wird, bevor die Sicherheitseinrichtung das Einführen in einem geeigneten Tankeinfüllstutzen detektiert und dadurch das Sicherheitsventil geöffnet hat. Fehlbetankungen werden so auch bei Fehlbedienung sicher vermieden.

Bei einer bevorzugten Ausführungsform der Erfindung kann im Bereich des Auslaufs eine gegenüber dem Auslaufrohr axial verschiebliche Schiebehülse angeordnet sein, an der oder mit der ein Wirkmagnet angeordnet bzw. verbunden ist, der mit dem magnetisch betätigbaren Sicherheitsventil wechselwirkt. Der Begriff Wirkmagnet besagt hier lediglich, dass der Magnet für eine entsprechende Wechselwirkung und damit Wirkverbindung mit dem Sicherheitsventil ausgebildet ist. Erfindungsgemäß kann auch am oder im Bereich des Sicherheitsventils ein solcher Wirkmagnet vorgesehen sein. Es können entweder ausschließlich am Sicherheitsventil oder ausschließlich im Bereich dieser Schiebehülse eine oder mehrere Magneten vorgesehen sein, die mit einem magnetisierbaren Material des entsprechenden Gegenelements (Schiebehülse bzw. Sicherheitsventil) wie beispielsweise Eisen oder Eisenlegierungen zusammenwirken. Bevorzugt ist es jedoch, wenn sowohl an der Schiebehülse als auch am Sicherheitsventil entsprechende Magneten angeordnet sind. Wenn im Rahmen der Erfindung von Magneten oder magnetischer Wechselwirkung die Rede ist, sind Permanentmagneten bevorzugt.

Die Schiebehülse kann durch das Einführen des Zapfventils in einen dafür ausgebildeten Tankeinfühlstutzen automatisch von einer Sperrstellung in eine Freigabestellung verschieblich sein. Dieses Verschieben der Schiebehülse bewirkt dann ein magnetisches Öffnen des Sicherheitsventils, so dass nach dem Einführen in den entsprechend ausgebildeten Tankeinfühlstutzen das Hauptventil des Zapfventils mittels des Betätigungshebels geöffnet und der Betankungsvorgang begonnen werden kann.

Das erfindungsgemäße Zapfventil kann zusätzlich eine Gasabsaugeinrichtung aufweisen, wie sie grundsätzlich aus dem Stand der Technik bekannt ist. Da durch Zersetzung von Harnstoff Ammoniak entstehen kann, kann eine solche Gasabsaugeinrichtung zur Vermeidung oder Verringerung einer Geruchsbelästigung beim Betanken mit Harnstofflösung beitragen.

Automatische Zapfventile besitzen in der Regel eine Sicherheitsabschaltung, die bei vollem Tank den Tankvorgang automatisch unterbricht. Das Auslaufrohr weist zu diesem Zweck eine sog. Fühlerleitung auf, die pneumatisch mit einer im Bereich des Hauptventils angeordneten Auslöseeinrichtung für dieses Hauptventil kommuniziert. Die Details der Ausgestaltung einer solchen Sicherheitsabschaltung sind dem Fachmann geläufig und beispielsweise in EP 2 386 520 A1 offenbart. Erreicht im Zuge eines Tankvorgangs der Flüssigkeitsspiegel das Ende des Auslaufrohrs und damit den Eingang der Fühlerleitung, ändern sich die Druckverhältnisse in der Fühlerleitung und führen zu einer Auslösung damit zu einem Schließen des Hauptventils. Erfindungsgemäß ist es vorteilhaft, wenn eine solche Sicherheitsabschaltung zusätzlich zum Schließen des Hauptventils bei Anstieg des Staudrucks zwischen Hauptventil und Sicherheitsventil über einen vorbestimmten Schwellwert ausgebildet ist. Wird mittels des Betätigungshebels das Hauptventil bei noch geschlossenem Sicherheitsventil geöffnet, steigt der Druck im Auslaufrohr stromauf des Sicherheitsventils bis auf den vor dem Hauptventil anstehenden Betriebsdruck, der durch die Pumpe der Zapfsäule hergestellt wird. Es entsteht dadurch ein erhöhter Differenzdruck zwischen dem Druck im Auslaufrohr einerseits und der Fühlerleitung der Sicherheitsabschaltung andererseits (Details zu diesen Begriffen in EP 2 386 520 A1), dieser erhöhte Differenzdruck führt zu einer Auslösung der Sicherheitsabschaltung und damit einer Entkoppelung des Hauptventils vom Betätigungshebel, das Hauptventil kann dann durch die Schließfeder wieder in die Schließstellung gebracht werden. Diese zusätzliche Sicherheitsmaßnahme verhindert, dass bei einer Fehlbedienung (ziehen des Betätigungshebels bei noch nicht ordnungsgemäß eingeführtem Zapfventil) der gesamte am Zapfventil anstehende Betriebsdruck zunächst ausschließlich vom Sicherheitsventil gehalten und über die Fühlerleitung zeitverzögert abgebaut werden muss.

Die als AdBlue verwendete 32,5 %ige wässrige Harnstofflösung ist eine hochkonzentrierte Salzlösung.

Kommt es beim Hantieren mit einem Zapfventil für Harnstofflösung zum Vertropfen, entstehen nach dem Verdunsten des Lösungsmittels Wasser auffällige Salzflecken. Das erfindungsgemäße Sicherheitsventil kann zusätzlich die Funktion eines Tropfschutzventils im Bereich des Auslaufendes wahrnehmen. Es verhindert, dass im Auslaufrohr noch befindliche Restmengen von Flüssigkeit bei geschlossenem Sicherheitsventil heraustropfen.

Gegenstand der Erfindung ist somit auch ein erfindungsgemäßes Zapfventil, das zur Abgabe von Harnstofflösung ausgebildet ist.

Ein weiterer Gegenstand der Erfindung ist eine Zapfsäule zur kombinierten Abgabe von Kraftstoffen und Harnstofflösung, die wenigstens ein Zapfventil zur Abgabe von Kraftstoff (insbesondere Dieselkraftstoff) aufweist. Erfindungsgemäß weist sie ferner wenigstens ein erfindungsgemäßes Zapfventil zur Abgabe von Harnstofflösung auf. Eine solche Zapfsäule erlaubt ein bequemes gleichzeitiges oder unmittelbar aufeinander folgendes Betanken mit Kraftstoff, insbesondere Dieselkraftstoff, und Harnstofflösung. Ein zwischenzeitliches Rangieren des Kraftfahrzeugs ist nicht erforderlich. Die Ausgestaltung des erfindungsgemäßen Zapfventils zur Abgabe von Harnstofflösung ohne Zufuhr von Fremdenergie, insbesondere elektrische Energie, erlaubt dessen Verwendung im unmittelbaren Umfeld einer Zapfsäule zur Abgabe von Kraftstoffen.

Ein Ausführungsbeispiel der Erfindung wird im Folgenden anhand der Zeichnung beschrieben. Darin zeigen:
- Fig. 1: einen Schnitt durch ein erfindungsgemäßes Zapfventil;
- Fig. 2: einen Zustand, in dem das erfindungsgemäße Zapfventil teilweise in den Tankeinfüllstutzen eines zugehörigen Harnstofftanks eingeführt ist;
- Fig. 3: einen Zustand, in dem das erfindungsgemäße Zapfventil vollständig in den Tankeinfüllstutzen eines zugehörigen Harnstofftanks eingeführt ist;
- Fig. 4: die Situation, wenn ein erfindungsgemäßes Zapfventil versehentlich in einen Tankeinfüllstutzen für bleifreies Benzin oder Dieselkraftstoff eingeführt wird;
- Fig. 5: eine alternative Ausführungsform der Erfindung eingeführt in einen PKW-Tankeinfüllstutzen mit Ringmagnet;
- Fig. 6: die alternative Ausführungsform der Erfindung eingeführt in einen LKW-Tankeinfüllstutzen mit Ringmagnet;
- Fig. 7: die Ausführungsform der Fig. 1-4 eingeführt in einen PKW-Tankeinfüllstutzen mit Ringmagnet.

Ein erfindungsgemäßes Zapfventil (umgangssprachlich auch Zapfpistole genannt) weist ein Ventilgehäuse 1, einen mit einem nicht dargestellten Schlauch verbundenen Einlass 2 für Flüssigkeit, ein Auslaufrohr 3 und einen Schalthebel 4 auf. Der Schalthebel 4 betätigt in bekannter und beispielsweise in EP 2 386 520 A1 beschriebener Weise Hauptventil 5 des Zapfventils. Eine Fühlerleitung 6 kommuniziert pneumatisch mit der Umgebung des Auslaufendes des Auslaufrohrs 3 und kann so in herkömmlicher und in der genannten EP-Schrift beschriebener Art und Weise eine Tank-Voll-Abschaltung bewirken.

Im Bereich des Auslaufendes des Auslaufrohrs 3 ist ein Sicherheitsventil 7 vorgesehen, dass stromab gegen einen Ventilsitz 8 schließt. Das stromauf weisende Ende des Ventilschaftes 9 ist mit einem Magnet 10 versehen.

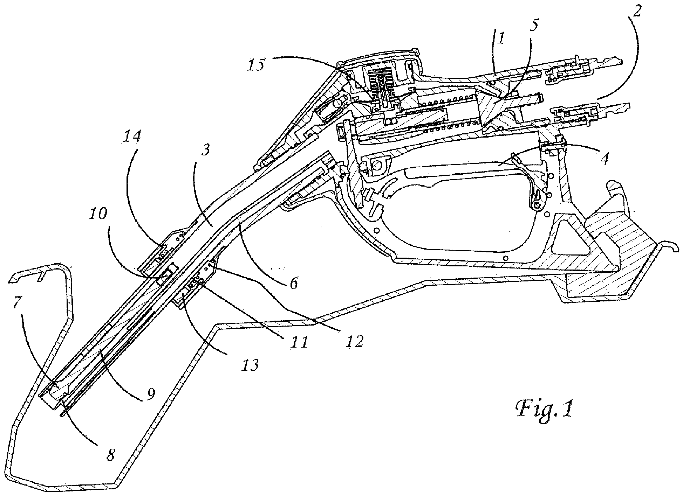

Um den Außenumfang des Auslaufrohrs 3 ist im Bereich des Auslaufendes eine Schiebehülse 11 angeordnet. Die Schiebehülse 11 wird von einer Druckfeder 12 in die in Figur 1 dargestellte Sperrstellung vorgespannt, in der sie sich in einer axialen Endstellung in Richtung auf das Auslaufende des Auslaufrohrs 3 zu befindet. An der Schiebehülse 11 ist ein ringförmiger Wirkmagnet 13 angeordnet. Die Schiebehülse 11 ist verschieblich in einer ihren Außenumfang konzentrisch umhüllenden zylindrischen Tasche 14, die auch die Druckfeder 12 aufnimmt.

In der in Fig. 1 gezeigten Stellung ist das Sicherheitsventil durch die magnetische Wechselwirkung zwischen Wirkmagnet 13 und Magnet 10 in die Schließstellung vorgespannt.

Wird in dem in Figur 1 dargestellten Betriebszustand mit geschlossenem Sicherheitsventil 7 der Betätigungshebel 4 gezogen, öffnet zunächst das Hauptventil 5 und lässt Flüssigkeit in das Auslaufrohr 3 einströmen. Dort steigt der Druck, da das Sicherheitsventil 7 keinen Austritt aus dem Auslaufrohr 3 ermöglicht. Sobald der Druck über einen festgelegten Schwellwert ansteigt, entsteht über der bei 15 angedeuteten Tankvollabschaltung bzw. deren Membran ein solcher Differenzdruck, dass diese die Tankvollabschaltung auslöst, den Betätigungshebel 4 vom Hauptventil 5 in bekannter Weise entkoppelt, sodass das Hauptventil 5 durch seine Schließfeder wieder geschlossen wird. Der Schwellwert für den Druck, bei dem eine solche Auslösung erfolgt, liegt oberhalb des bei einer üblichen Betankung im Auslaufrohr 3 herrschenden Druckes und unterhalb des am Eingang 2 des Zapfventils (durch die Pumpe der Zapfsäule bereitgestellten) Betriebsdrucks.

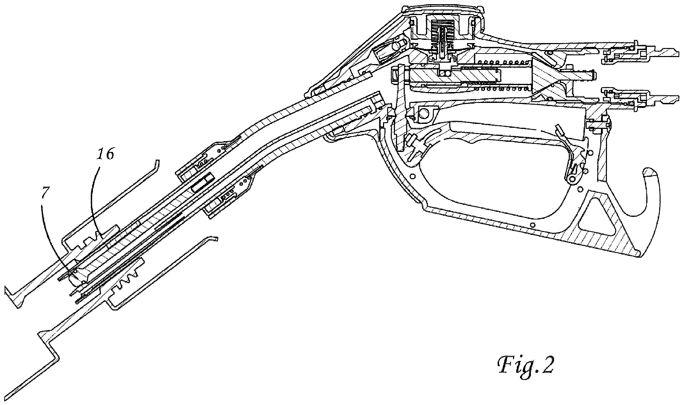

Figur 2 zeigt einen Zustand, in dem das erfindungsgemäße Zapfventil teilweise in den Tankeinfüllstutzen eines zugehörigen Harnstofftanks eingeführt ist. Das Sicherheitsventil 7 ist nach wie vor geschlossen.

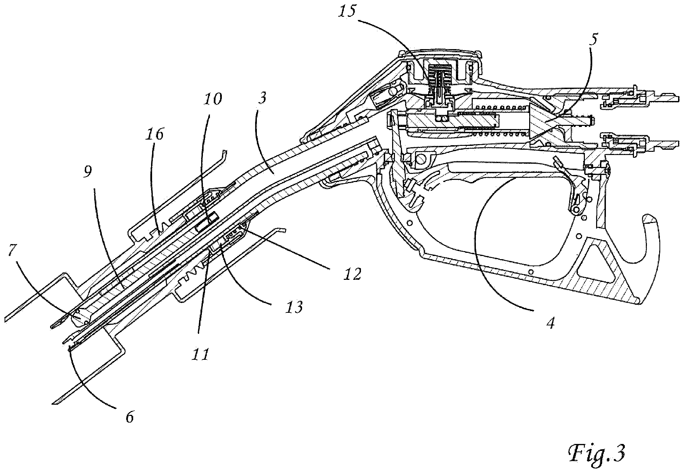

In Figur 3 ist das Auslaufende des Auslaufrohrs 3 vollständig eingeführt in den Tankstutzen 16 eines Harnstoffstanks eines PKW. Dieser ist so gestaltet, dass er das Auslaufrohr bereits unmittelbar im Bereich des Beginns des Einfüllstützens eng umschließt, wie in Figur 3 dargestellt. Die ringförmige Stirnfläche der Schiebehülse 11 stößt gegen die entsprechende Gegenfläche des Tankeinfüllstutzens 16 und die Schiebehülse 11 wird von der in Figur 1 und 2 dargestellten Sperrstellung in die in Figur 3 dargestellte Freigabestellung gegen den Druck der Feder 12 verschoben. In dieser Stellung stößt das stromauf gerichtete Ende der Schiebehülse 11 gegen einen Anschlag. Mit der Schiebehülse 11 wird auch der Wirkmagnet 13 entsprechend axial verschoben. Durch die magnetische Wirkverbindung zwischen dem Wirkmagneten 13 und dem Magneten 10 am Ventilschaft 9 wird das Sicherheitsventil 7 in die in Figur 3 dargestellte Öffnungsstellung bewegt. Diese Öffnungsbewegung geschieht in Richtung stromauf. Der Betankungsvorgang kann jetzt begonnen werden durch Ziehen des Schalthebels 4 und dadurch bewirktes Öffnen des Hauptventils 5. Der Ausstrom von Flüssigkeit durch das Auslaufrohr 3 ist dergestalt, dass das Sicherheitsventil 7 in seiner Öffnungsstellung verbleibt und der Betankungsvorgang durchgeführt werden kann.

Der Betankungsvorgang kann in üblicher Weise durch Loslassen bzw. Entriegeln des Betätigungshebels 4 beendet werden. Ist der Tank weitestgehend gefüllt, taucht das Ende des Auslaufrohrs 3 und damit auch die Fühlerleitung 6 in Flüssigkeit ein. Der dabei auftretende Druckunterschied bewirkt pneumatisch in herkömmlicher und beispielsweise in EP 2 386 520 A1 beschriebener Weise eine Abschaltung des Hauptventils und damit eine Beendigung des Betankungsvorgangs.

Der Betankungsvorgang wird ebenfalls beendet, sollte das Zapfventil aus dem Tankeinfüllstutzen 16 herausgezogen und die Schiebehülse 11 wieder von der Freigabestellung der Figur 3 mittels der Feder 12 zurück in die Sperrstellung der Figur 1 oder 2 geschoben werden. Durch die magnetische Wechselwirkung zwischen dem Ringmagneten 13 (Wirkmagnet 13) und dem Magneten 10 wird das Sicherheitsventil 7 in Richtung stromab zurück in seine Schließstellung bewegt. Ist das Hauptventil 5 jetzt noch geöffnet, kommt es durch den Druckanstieg im Auslaufrohr 3 zu einer vorstehend beschriebenen Auslösung der Tankvollabschaltung 15 und damit einem Schließen des Hauptventils 5.

Im Zuge des Betankungsvorgangs entweichende Gase kann das Zapfventil in üblicher Weise durch einen nicht dargestellten Gasabsaugkanal rückführen.

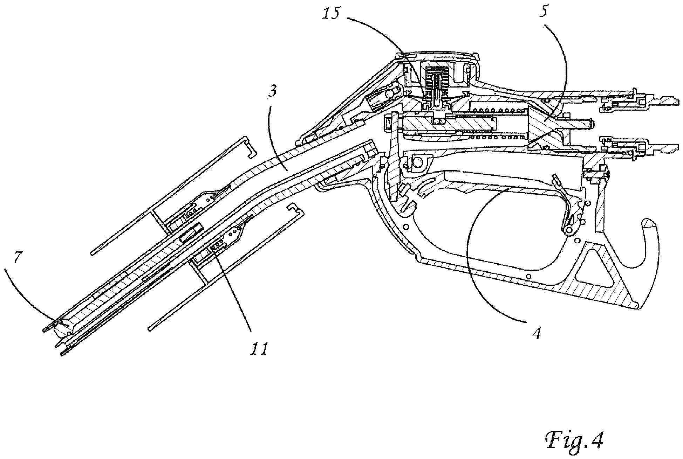

Die Figur 4 zeigt die Situation, wenn ein erfindungsgemäßes Zapfventil versehentlich in einen Tankeinfüllstutzen für bleifreies Benzin oder Dieselkraftstoff eingeführt wird. Die Schiebehülse 11 verbleibt in jedem Fall in der Sperrstellung, so dass kein Betankungsvorgang erfolgen kann. Wird dennoch der Betätigungshebel 4 gezogen, führt der Druckanstieg im Auslaufrohr 3 bei geschlossenem Sicherheitsventil 7 zu einer Auslösung der Tankvollabschaltung 15 und damit wieder zu einem Schließen des Hauptventils.

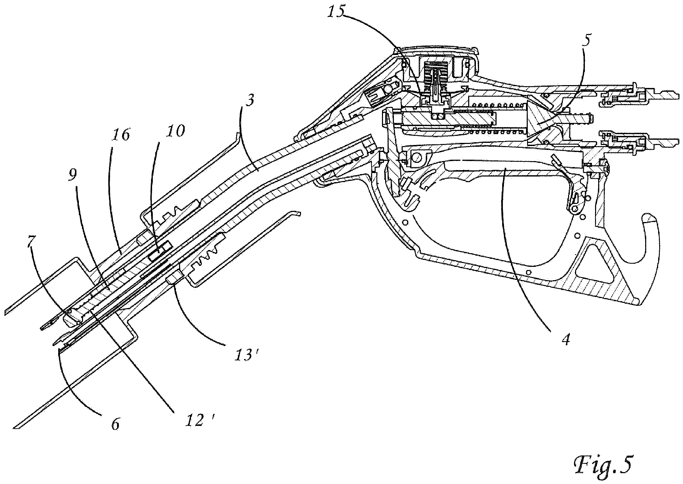

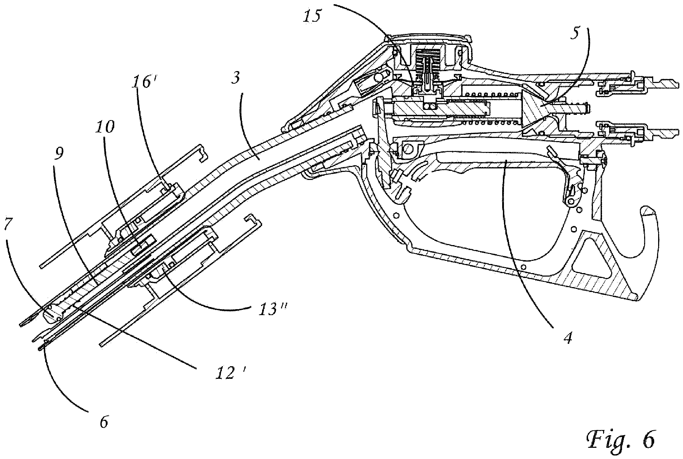

Die Figuren 5 und 6 zeigen eine weitere Ausführungsform der Erfindung. Die Schiebehülse 11 entfällt bei dieser Ausführungsform. Die Vorspannung des Sicherheitsventils 7 in die Schließstellung erfolgt hier durch eine unmittelbar dem Sicherheitsventil 7 zugeordnete Schließfeder 12'.

Das Öffnen des Sicherheitsventils 7 gegen die Kraft der Feder 12' erfolgt hier beim Einführen in einen Tankeinfüllstutzen durch Wechselwirkung des Magneten 10 mit einem im Tankeinfüllstutzen angeordneten Ringmagneten.

Figur 5 zeigt diese Ausführungsform der Erfindung eingeführt in einen PKW-Einfüllstutzen für Harnstofflösung, der einem Ringmagneten 13' aufweist. Nach dem vollständigen Einführen in den Stutzen erfolgt eine magnetische Wechselwirkung zwischen dem Magneten 10 und dem Magneten 13' dergestalt, dass das Sicherheitsventil 7 öffnet und der Betankungsvorgang begonnen werden kann.

Figur 6 zeigt diese Ausführungsform der Erfindung eingeführt in einen Einfüllstutzen für Harnstofflösung eines Lkw, der etwas anders konstruiert ist. Auch hier wird nach dem vollständigen Einführen das Sicherheitsventil 7 geöffnet durch Wechselwirkung des Magneten 10 mit einem im Einfüllstutzen angeordneten Ringmagneten 13''.

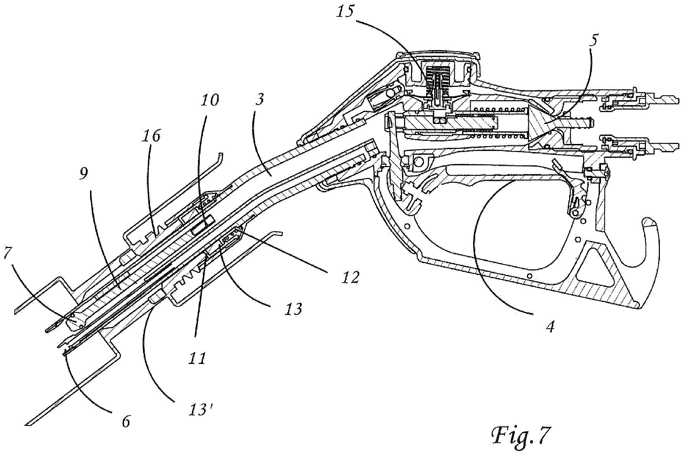

In Figur 7 ist die Ausführungsform der Figuren 1-4 eingeführt in einen Einfüllstutzen , der einen Ringmagneten 13' aufweist. Man erkennt, dass hier die Öffnung des Sicherheitsventils 7 erfolgt in üblicher Weise durch Wechselwirkung zwischen dem Magneten 10 und dem Magneten 13. Der im Einfüllstutzen angeordnete Magnet 13' stört nicht, da er räumlich zu weit entfernt vom Magneten 10 angeordnet ist.

## Patentansprüche

1. Zapfventil zur Abgabe einer Flüssigkeit in einen Tank eines Kraftfahrzeugs, mit einem Hauptventil (5), **dadurch gekennzeichnet, dass** stromab von dem Hauptventil (5) ein Sicherheitsventil (7) angeordnet ist, das von einer Schließstellung durch eine in Richtung stromauf weisende Öffnungsbewegung in eine Öffnungsstellung bringbar ist, und dass eine Sicherheitseinrichtung (11) vorgesehen ist, die eine Wirkverbindung mit dem Sicherheitsventil (7) aufweist, die zur Detektion des Einführens des Zapfventils in einen für die entsprechende Flüssigkeit vorgesehenen Tank ausgebildet ist, und die eine Bewegung des Sicherheitsventils von der Schließ- in die Öffnungsstellung bewirkt, sobald ein Einführen des Zapfventils in einen für die entsprechende Flüssigkeit vorgesehenen Tank detektiert wird.

2. Zapfventil nach Anspruch 1, **dadurch gekennzeichnet, dass** die Wirkverbindung zwischen Sicherheitseinrichtung (11) und Sicherheitsventil (7) ohne Fremdenergie erfolgt.

3. Zapfventil nach Anspruch 2, **dadurch gekennzeichnet, dass** die Wirkverbindung zwischen Sicherheitseinrichtung (11) und Sicherheitsventil (7) magnetisch erfolgt.

4. Zapfventil nach einem der Ansprüche 1 bis 3, **dadurch gekennzeichnet, dass** das Sicherheitsventil (7) im Bereich des Auslaufrohrs (3) angeordnet ist.

5. Zapfventil nach Anspruch 4, **dadurch gekennzeichnet, dass** das Sicherheitsventil (7) einen Ventilsitz (8) im Bereich des Auslaufendes des Auslaufrohrs (3) aufweist.

6. Zapfventil nach einem der Ansprüche 1 bis 5, **dadurch gekennzeichnet, dass** das Sicherheitsventil (7) durch Flüssigkeitsdruck im Auslaufrohr (3) in die Schließstellung vorgespannt wird.

7. Zapfventil nach Anspruch 6, **dadurch gekennzeichnet, dass** es im Bereich des Auslaufs eine axial verschiebliche Schiebehülse (11) aufweist, wobei an der Schiebehülse ein Wirkmagnet (13) angeordnet ist, der mit dem magnetisch betätigbaren Sicherheitsventil (7) wechselwirkt.

8. Zapfventil nach Anspruch 7, **dadurch gekennzeichnet, dass** das Sicherheitsventil (7) einen am Ventilschaft angeordneten Magneten (10) zur Wechselwirkung mit dem Wirkmagnet (13) aufweist.

9. Zapfventil nach Anspruch 7 oder 8, **dadurch gekennzeichnet, dass** die Schiebehülse (11) durch das Einführen des Zapfventils in einen dafür ausgebildeten Tankeinfüllstutzen (16) von einer Sperrstellung in eine Freigabestellung verschieblich ist.

10. Zapfventil nach einem der Ansprüche 1 bis 9, **dadurch gekennzeichnet, dass** es zusätzlich eine Gasabsaugeinrichtung aufweist.

11. Zapfventil nach einem der Ansprüche 1 bis 10, **dadurch gekennzeichnet, dass** es eine Sicherheitsabschaltung aufweist, die bei Detektion eines vollen Tanks den Befüllvorgang durch Schließen des Hauptventils (5) unterbricht, und dass diese Sicherheitsabschaltung zusätzlich zum Schließen des Hauptventils bei Anstieg des Staudrucks zwischen Hauptventil (5) und Sicherheitsventil (7) über einen vorbestimmten Schwellwert ausgebildet ist.

12. Zapfventil nach einem der Ansprüche 1 bis 11, **dadurch gekennzeichnet, dass** es zur Abgabe von Harnstofflösung ausgebildet ist.

13. Zapfsäule zur kombinierten Abgabe von Kraftstoffen und Harnstofflösung, mit wenigstens einem Zapfventil zur Abgabe von Kraftstoff, **dadurch gekennzeichnet, dass** sie wenigstens ein Zapfventil nach Anspruch 12 zur Abgabe von Harnstofflösung aufweist.

## Claims

1. Filling nozzle for dispensing a liquid into a tank of a motor vehicle, having a main valve (5), **characterized in that** a safety valve (7) is arranged downstream of the main valve (5), which safety valve can be moved from a closed position into an open position by means of an opening movement directed in an upstream direction, and **in that** a safety device (11) is provided which has an operative connection to the safety valve (7) and which is designed to detect the insertion of the filling nozzle into a tank provided for the corresponding liquid and which effects a movement of the safety valve from the closed position into the open position when an insertion of the filling nozzle into a tank provided for the corresponding liquid is detected.

2. Filling nozzle according to Claim 1, **characterized in that** the operative connection between the safety device (11) and safety valve (7) is realized without external energy.

3. Filling nozzle according to Claim 2, **characterized in that** the operative connection between the safety device (11) and safety valve (7) is realized magnetically.

4. Filling nozzle according to one of Claims 1 to 3, **characterized in that** the safety valve (7) is arranged in the region of the outlet pipe (3).

5. Filling nozzle according to Claim 4, **characterized in that** the safety valve (7) has a valve seat (8) in the region of the outlet end of the outlet pipe (3).

6. Filling nozzle according to one Claims 1 to 5, **characterized in that** the safety valve (7) is preloaded into the closed position by liquid pressure in the outlet pipe (3).

7. Filling nozzle according to Claim 6, **characterized in that** it has an axially displaceable sliding sleeve (11) in the region of the outlet, wherein, on the sliding sleeve, there is arranged an operative magnet (13) that interacts with the magnetically actuable safety valve (7).

8. Filling nozzle according to Claim 7, **characterized in that** the safety valve (7) has, arranged on the valve shank, a magnet (10) for interacting with the operative magnet (13).

9. Filling nozzle according to Claim 7 or 8, **characterized in that** the sliding sleeve (11) can be displaced from a blocking position into an enable position by the insertion of the filling nozzle into a tank filler neck (16) designed for the same.

10. Filling nozzle according to one of Claims 1 to 9, **characterized in that** it additionally has a gas extraction device.

11. Filling nozzle according to one of Claims 1 to 10, **characterized in that** it has a safety shut-off means which stops the filling process by closing the main valve (5) when a full tank is detected, and **in that** said safety shut-off means is additionally designed to close the main valve if the back pressure between the main valve (5) and safety valve (7) rises above a predetermined threshold value.

12. Filling nozzle according to one of Claims 1 to 11, **characterized in that** it is designed for dispensing urea solution.

13. Filling pump for the combined dispensing of fuels and urea solution, having at least one filling nozzle for dispensing fuel, **characterized in that** said filling pump has at least one filling nozzle according to Claim 12 for dispensing urea solution.

## Revendications

1. Pistolet pour délivrer un liquide dans un réservoir de véhicule automobile, présentant une vanne principale (5),
**caractérisé en ce que**
en aval de la vanne principale (5) est disposée une vanne de sécurité (7) qui peut être amenée d'une position de fermeture à une position d'ouverture dans un déplacement d'ouverture orienté dans la direction amont et
**en ce qu'**un dispositif de protection (11) qui présente une liaison fonctionnelle avec la vanne de protection (7) est prévu, est configuré pour détecter l'insertion du pistolet dans un réservoir prévu pour le liquide concerné et a pour effet un déplacement de la vanne de sécurité de la position de fermeture à la position d'ouverture dès que l'insertion du pistolet dans un réservoir prévu pour le liquide concerné a été détectée.

2. Pistolet selon la revendication 1, **caractérisé en ce que** la liaison fonctionnelle entre le dispositif de sécurité (11) et la vanne de sécurité (7) s'effectue sans apport d'énergie extérieure.

3. Pistolet selon la revendication 2, **caractérisé en ce que** la liaison fonctionnelle entre le dispositif de sécurité (11) et la vanne de sécurité (7) s'effectue magnétiquement.

4. Pistolet selon les revendications 1 à 3,
**caractérisé en ce que** la vanne de sécurité (7) est disposée au niveau du tube de sortie (3).

5. Pistolet selon la revendication 4, **caractérisé en ce que** la vanne de sécurité (7) présente un siège de vanne (8) au niveau de l'extrémité de sortie du tube de sortie (3).

6. Pistolet selon l'une des revendications 1 à 5,
**caractérisé en ce que** la vanne de sécurité (7) est précontrainte en position de fermeture par la pression du liquide présent dans le tube de sortie (3).

7. Pistolet selon la revendication 6, **caractérisé en ce qu'**il présente au niveau de la sortie une douille coulissante (11) apte à se déplacer axialement, un aimant d'actionnement (13) qui coopère avec la vanne de sécurité (7) actionnée magnétiquement étant disposé sur la douille coulissante.

8. Pistolet selon la revendication 7, **caractérisé en ce que** la vanne de sécurité (7) présente un aimant (10) de vanne et destiné à coopérer avec l'aimant d'actionnement (13).

9. Pistolet selon les revendications 7 ou 8,
**caractérisé en ce que** la douille coulissante (11) peut coulisser d'une position de blocage jusque dans une position de libération par l'insertion du pistolet dans une tubulure (16) de remplissage de réservoir configurée dans ce but.

10. Pistolet selon l'une des revendications 1 à 9,
**caractérisé en ce qu'**il présente en outre un dispositif d'aspiration de gaz.

11. Pistolet selon l'une des revendications 1 à 10,
**caractérisé en ce qu'**il présente un débranchement de sécurité qui interrompt l'opération de remplissage par fermeture de la vanne principale (5) lorsqu'il est détecté que le réservoir est plein et **en ce que** ce débranchement de sécurité est de plus configuré pour fermer la vanne principale lorsque la pression d'accumulation entre la vanne principale (5) et la vanne de sécurité (7) augmente au delà d'une valeur de seuil prédéterminée.

12. Pistolet selon l'une des revendications 1 à 11,
**caractérisé en ce qu'**il est configuré pour délivrer une solution d'urée.

13. Poste de remplissage de réservoir destiné à délivrer de manière combinée des carburants et une solution d'urée et présentant au moins un pistolet de fourniture de carburant, **caractérisé en ce que** le poste présente au moins un pistolet selon la revendication 12 pour la fourniture d'une solution d'urée.
